# EUROPEAN PATENT SPECIFICATION

(11) **EP 3 001 529 B1**
(45) Date of publication and mention of the grant of the patent: **20.06.2018**
(21) Application number: 14801545.6
(22) Date of filing: 07.05.2014
(51) Int. Cl.: H01M 8/04, H01M 8/04828, H01M 8/04955, H02J 3/38, H01M 8/04858

(54) **METHOD FOR CONTROLLING OUTPUT OF INVERTERS IN FUEL CELL SYSTEM AND FUEL CELL**
VERFAHREN ZUR LEISTUNGSSTEUERUNG VON WECHSELRICHTERN IN EINEM BRENNSTOFFZELLENSYSTEM UND BRENNSTOFFZELLE
PROCÉDÉ DE COMMANDE DE SORTIE D'ONDULEURS DANS UN DISPOSITIF DE PILE À COMBUSTIBLE ET DE PILE À COMBUSTIBLE

(30) Priority: 21.05.2013 KR 20130057273
(43) Date of publication of application: 30.03.2016
(73) Proprietor: Kyung Dong One Corporation, Seoul 150-870 (KR)
(72) Inventor: HWANG, Gye Ho, Seongnam-si Gyeonggi-do 463-827 (KR)
(74) Representative: reuteler & cie SA
(86) International application number: PCT/KR2014/004034
(87) International publication number: WO 2014/189217

(56) References cited:
- JP-A- H07 336 899
- JP-A- 2001 186 663
- JP-A- 2001 186 663
- JP-A- 2004 140 909
- JP-A- 2005 245 050
- JP-A- 2010 108 807
- JP-A- 2011 067 078
- JP-A- 2011 067 078

## Description

### [Technical Field]

The present invention relates to a method for controlling output of inverters and a fuel cell in a fuel cell system, and more particularly, to a method for controlling output of inverters and a fuel cell in a fuel cell system capable of operating each of the inverter groups by segmenting ranges of output frequencies for each of the inverter groups within the fuel cell system into several ranges in a reference value to be set for each of the inverter groups and stabilizing the output frequencies by blocking the inverters within the range segmented for each of the inverter groups in the fuel cell system when the output frequencies become unstable while each of the inverter groups are operated, thereby promoting active grid protection.

### [Background Art]

Korean Patent Laid-Open Publication No. 10-2010-0036022 "Power Control Method of Fuel Cell and Fuel Cell System Thereof" discloses that "three or more fuel cells, that is, first to third fuel cells 30, 40, and 50 are provided. A power converter 60 for converting direct current (DC) power supplied from each of the first to third fuel cells 30, 40, and 50 into alternating current (AC) power to supply the AC power to a power grid, is provided. The power converter 60 serves to sense output voltage of the first to third fuel cells. According to the sensing result, it is determined whether the output voltage of the first to third fuel cells 30, 40, and 50 corresponds to normal voltage, minimum voltage, or threshold voltage. When the output voltages of all the first to third fuel cells 30, 40, and 50 all correspond to normal voltage, output power of the first to third fuel cells 30, 40, and 50 is uniformly controlled and supplied as required load power of the power grid. However, when output voltage of at least one fuel cell of the first to third fuel cells 30, 40, and 50 is sensed as the minimum voltage, output power of the first to third fuel cells 30, 40, and 50 is output in a predetermined level which is programmed in advance. Further, when output voltage of at least one of the first to third fuel cells 30, 40, and 50 is sensed as the threshold voltage, power of the fuel cell outputting threshold voltage is controlled not to output power. In some cases, the output power of the fuel cell outputting the minimum voltage or the threshold voltage is maintained as it is, and the rest of the fuel cells are controlled to output the power while compensating for the required load power. According to the present invention, the required load power may be stably supplied according to a state of output voltage of a plurality of fuel cells, thereby preventing the fuel cell damage and improving efficiency of the overall system operation".

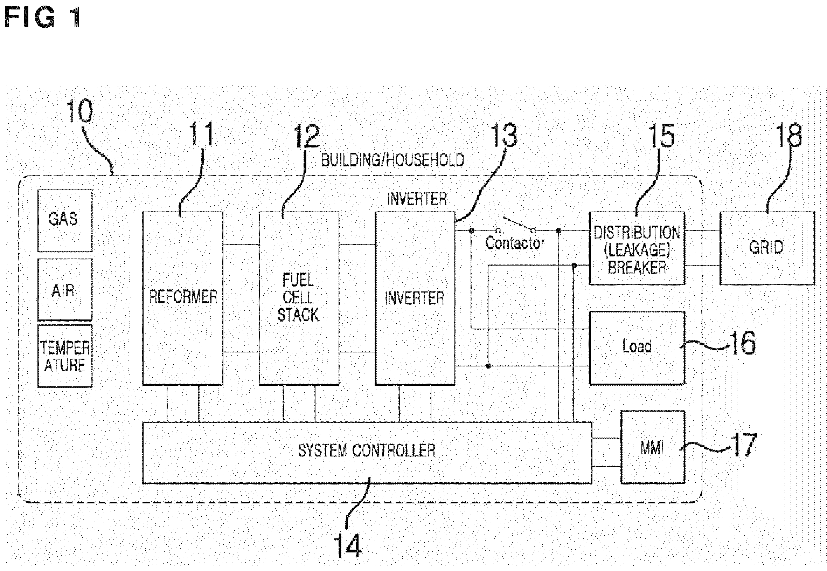

As shown in FIG. 1, illustrating an example of the related art, a fuel cell system 10 includes a reformer 11, a fuel cell stack 12, an inverter 13, a system controller 14, a distribution circuit breaker 15, a load 16, a man machine interface (MMI) 17, and a grid 18.

JP2011067078 discloses a power supply system that includes a main control generating device and a control generating device for reducing a load of the main control generating device.

JP2004140909 discloses a control method to ensure that an electric power of a parallel AC power supply system of a master-slave system is stably supplied to a load even if the master stops due to failure.

JP2010108807 discloses a fuel cell power system and a control method thereof.

### [Disclosure]

### [Technical Problem]

However, when all of the output voltages and output frequencies within the fuel cell system are under the reference value, the fuel cell system may be operated and then blocked at one time, thereby causing enormous trouble to the grid, for example, instability of a grid voltage (output voltage) and a gird frequency (output frequency), and the grid shut down.

The occupancy of the initial fuel cell system in the overall grid is still insufficient, and therefore these phenomena do not occur. However, as the demand for the fuel cell system increases, the problems caused by these phenomena need to be solved.

An object of the present invention is to provide a method for controlling output of inverters and a fuel cell in a fuel cell system capable of operating each of the inverter groups by segmenting ranges of output frequencies for each of the inverter groups within the fuel cell system into several ranges within a reference value to be set for each of the inverter groups, thereby improving the phenomenon that the fuel cell system is operated and then blocked at a time when all of the output voltages and output frequencies within the fuel cell system is under the reference value and stabilizing the output frequencies by blocking the inverters within the range segmented for each of the inverter groups in the fuel cell system when the output frequencies become instable while each of the inverter groups are operated, thereby promoting active grid protection.

### [Technical Solution]

The present invention for achieving the above objectives are solved by the features of independent claim 1 which are defining the invention. Preferred embodiment is defined in the dependent claim 2. The invention includes: a first step (S1) allocating a serial number (SW) to each inverter group; a second step (S2) determining whether the serial number is 1; a third step (S3) determining whether a grid frequency f is within a range of a second minimum frequency value and a second maximum frequency value; a fourth step (S4) normally operating the inverter; a fifth step (S5) determining whether a voltage is within a normal range; a sixth step (S6) determining whether a current is within the normal range; a seventh step (S7) normally operating the inverter; an eighth step (S8) determining whether the grid frequency f is within a range of a first minimum frequency value and a first maximum frequency value; a ninth step (S9) determining whether the serial number (SW) is 2 if it is determined in the second step (S2) that the serial number (SW) is not 1; a tenth step (S10) determining whether the grid frequency f is within a range of a third minimum frequency value and a third maximum frequency value; an eleventh step (S11) normally operating the inverter; a twelfth step (S12) keeping the inverter at stand by if it is determined in the third step (S3) that the grid frequency f is not between the second minimum frequency value and the second maximum frequency value,; a thirteenth step (S13) determining whether the inverter state is checked; a fourteenth step (S14) determining, periodically, whether the grid frequency is normal; and a fifteenth step (S15) determining whether the grid frequency f is between the first minimum frequency value and the first maximum frequency value.

In the embodiment, The method may include: a sixteenth step (S16) displaying a voltage error if it is determined in the fifth step (S5) that the voltage is not within the normal range; a seventeenth step (S17) displaying a current error if it is determined in the sixth step (S6) that current is not within the normal range; an eighteenth step (S18) displaying a grid frequency error if it is determined in the eighth step (S8) that the grid frequency is not between the first minimum frequency value and the first maximum frequency value; and a nineteenth step (S19) stopping the inverter if it is determined in the thirteenth step (S13) that the inverter state is not checked, if it is determined in the fifteenth step (S15) that the grid frequency is not between the first minimum frequency value and the first maximum frequency value, or if the sixteenth, seventeenth, and eighteenth steps (S16) (S17) (S18) are performed.

### [Advantageous Effects]

According to the exemplary embodiments of the present invention, supply of fuel cell system is expected to expand with the trend towards spread of new renewable energies, thus it is possible to provide an active system and method for promoting stable grid protection.

### [Description of Drawings]

FIG. 1 is a block diagram illustrating configuration of a fuel cell system according to the related art.
FIG. 2 is a block diagram illustrating configuration of a fuel cell system according to the present invention.
FIG. 3 is a graph illustrating a grid frequency when a single inverter is installed in the fuel cell system according to the present invention.
FIG. 4 is a graph illustrating a grid frequency when a plurality of inverters are installed in the fuel cell system according to the present invention.
FIG. 5 is a flow chart illustrating a method for controlling output of inverters and a fuel cell according to the present invention.

### [Best Mode]

Hereinafter, the present invention will be described in more detail with reference to the accompanying drawings.

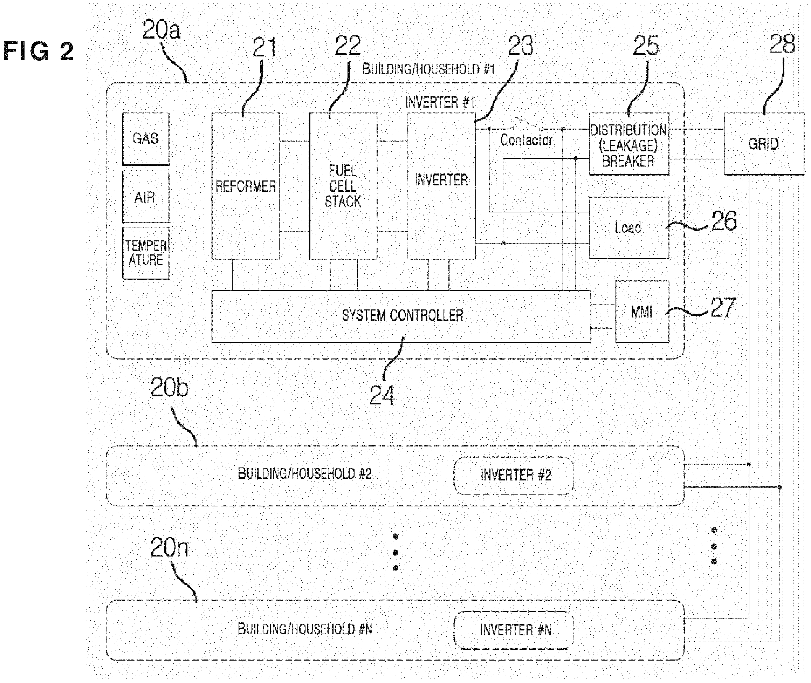

FIG. 2 is a block diagram illustrating a configuration of a fuel cell system according to the present invention. The fuel cell system is configured to include first to n-th fuel cell systems 20a, 20b, and 20n but an internal configuration of the fuel cell system will be described in detail with reference to the first fuel cell system 20a.

The fuel cell system includes a reformer 21 reforming air and gas supplied thereto into hydrogen gas, a fuel cell stack 22 in which a plurality of cells are stacked, the plurality of cells including a pair of anode and cathode, and an inverter 23 converting direct current to alternating current. Further, the fuel cell system includes a system controller 24 controlling the overall fuel cell system by using parameters such as temperature, gas, air, and the like, a distribution circuit breaker 25 blocking distribution upon leakage, and a grid 28 outputting the alternating current converted in the inverter 23 to the outside.

The fuel cell system includes a load 26 directly receiving and consuming the alternating current converted in the inverter 23, and a man machine interface (MMI) 27 which is an interface connected to the system controller 24 to receive setting from a user. That is, the first to the n-th fuel cell systems 20a to 20n are provided.

Meanwhile, a system controller 24 in the fuel cell system and a converter controller in the inverter 23 are provided, in which the system controller 24 controls the fuel cell system 20a and the converter controller controls the inverter 23, respectively.

The system controller 24 and the converter controller are connected, and the system controller 24 and the converter controller may be configured to be changed into hardware or software which sets grid frequency range.

Further, the system controller 24 and the converter controller share parameters including grid frequency range and grid voltage and actively operate the inverter.

In this case, when the grid frequency range is within installation grid frequency range for each inverter group within a reference range consisting of a minimum value and a maximum value, the inverter 23 is operated, and when the grid frequency range is out of the installation grid frequency range, the inverter 23 is blocked from the grid. The inverter 23 goes into a standby state to periodically check grid frequencies and if the grid frequency range is within the installation grid frequency range, the inverter 23 is again connected to the grid 28 to stably protect the grid and the inverter 23 and the fuel cell system 20a are controlled to be actively operated corresponding to the grid 28.

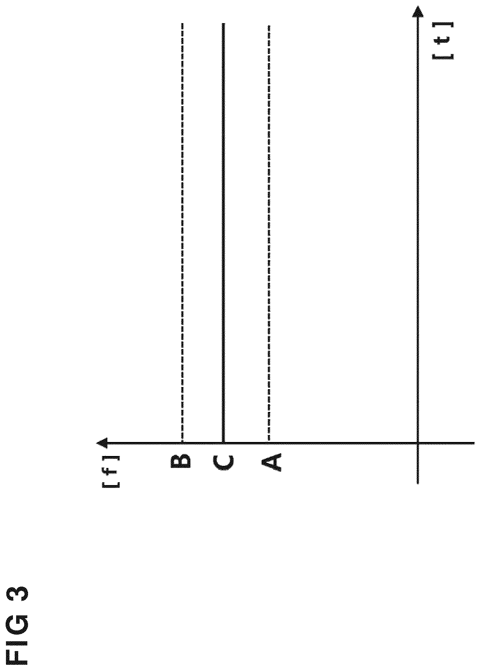

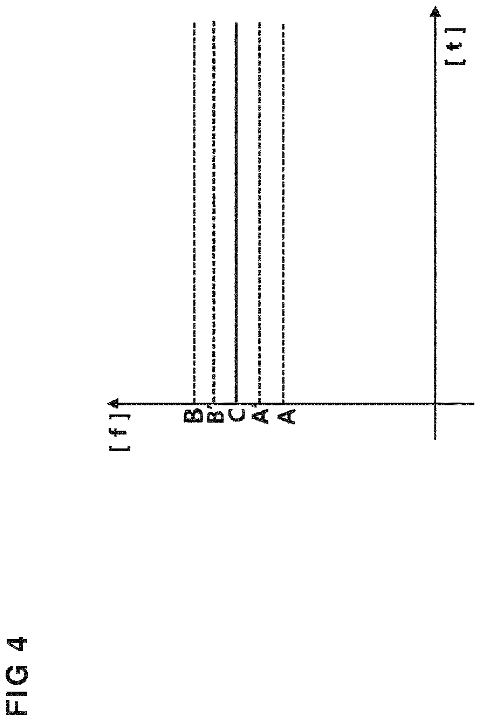

In an embodiment where one inverter is in a building as illustrated in FIG. 3 and when two inverters are in a building as illustrated in FIG. 4, a frequency range is set in a program in the inverter and is programmed to set a grid frequency C between a minimum frequency value A and a maximum frequency value B, and operating ranges for each inverter group is set to block connection from the grid and when the grid is constantly maintained, the inverter is again connected to the grid and is configured to check course of frequency change and immediately take action .

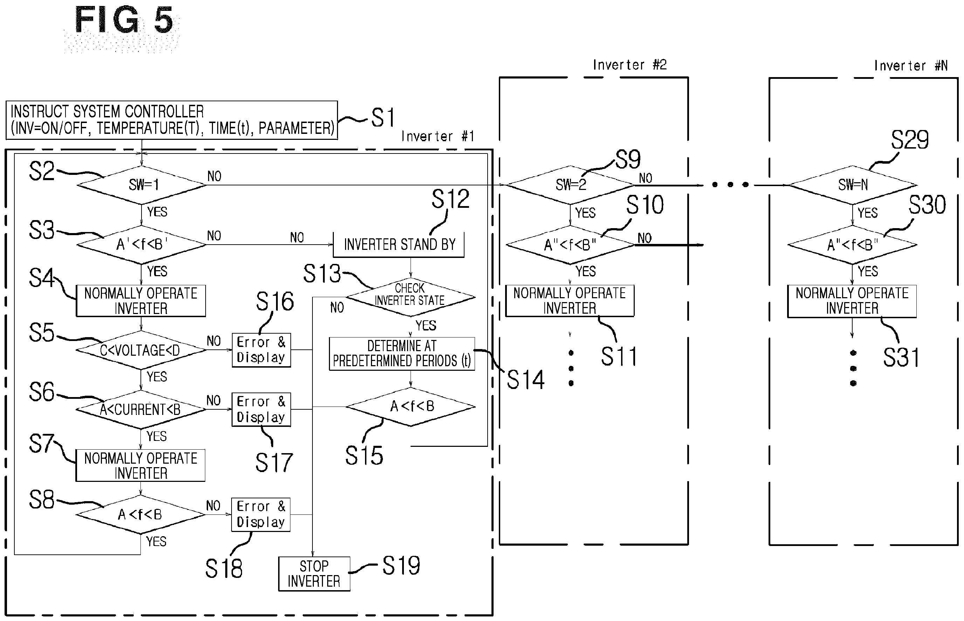

A method for controlling output of inverters and a fuel cell according to an exemplary embodiment of the present invention is as illustrated in FIG. 5.

A first step (S1) is performed to allocate a serial number (SW) to each inverter group. Here, the serial number is set by designating the serial number (SW) as a variable depending on the program installed in the system controller.

Next, a second step (S2) determining whether the serial number is 1 is performed.

A third step (S3) determining whether the grid frequency f is within a range of a second minimum frequency value and a second maximum frequency value is performed and a fourth step (S4) normally operating the inverter is performed.

A fifth step (S5) determining whether a voltage is within a normal range is performed, a sixth step (S6) determining whether a current is within the normal range is performed, and a seventh step (S7) normally operating the inverter is performed.

An eighth step (S8) determining whether the grid frequency f is within a range of a first minimum frequency value and a first maximum frequency value is performed and if it is determined in the second step (S2) that the serial number (SW) is not 1, a ninth step (S9) determining whether the serial number (SW) is 2 is performed.

A tenth step (S10) determining whether the grid frequency f is within a range of a third minimum frequency value and a third maximum frequency value is performed and an eleventh step (S11) normally operating the inverter is performed.

If it is determined in the third step (S3) that the grid frequency f is not between the second minimum frequency value and the second maximum frequency value, a twelfth step (S12) keeping at stand by the inverter is performed and a thirteenth step (S13) determining whether the inverter state is checked is performed.

A fourteenth step (S14) determining, periodically, whether the grid frequency is normal is performed and a fifteenth step (S15) determining whether the grid frequency f is between the first minimum frequency value and the first maximum frequency value is performed.

If it is determined in the fifth step (S5) that the voltage is not in the normal range, a sixteenth step (S16) displaying voltage error is performed, if it is determined in the sixth step (S6) that current is not in the normal range, a seventeenth step (S17) displaying a current error is performed, and if it is determined in the eighth step (S8) that the grid frequency is not between the first minimum frequency value and the first maximum frequency value, an eighteenth step (S18) displaying a grid frequency error is performed, respectively.

If it is determined in the thirteenth step (S13) that the inverter state is not checked, or if it is determined in the fifteenth step (S15) that the grid frequency is not between the first minimum frequency value and the first maximum frequency value, or if the sixteenth, seventeenth, and eighteenth steps (S16)(S17)(S18) are performed, a nineteenth step (S19) stopping the inverter is performed.

The control flow as described above is identically performed for each inverter and if the serial number (SW) of the inverter is 1, the control flow as described above is performed in an inverter #1 and if the serial number is 2, the control flow is performed in inverter #2 and if the serial number is N, the control flow is performed in the inverter #N, respectively.

### [Description of reference numerals]

20a,20b,20n: First fuel cell system, second fuel cell system, n-th fuel cell system
21: Reformer
22: Fuel cell stack
23: Inverter
24: System controller
25: Distribution circuit breaker
26: Load
27: MMI
28: Grid

## Claims

1. A method for controlling output of inverters and a fuel cell in a fuel cell system, comprising:
a first step (S1) allocating a serial number (SW) to each inverter;
a second step (S2) determining for an inverter selected out of said inverters whether the serial number is 1;
a third step (S3) determining whether a grid frequency f is within a range of a second minimum frequency value and a second maximum frequency value which are predetermined within a reference range spanning from a first minimum frequency value to a first maximum frequency value;
a fourth step (S4) normally operating said selected inverter;
a fifth step (S5) determining whether the voltage output of said selected inverter is within a normal range;
a sixth step (S6) determining whether the current output of said selected inverter is within a normal range;
a seventh step (S7) normally operating said selected inverter;
an eighth step (S8) determining whether the grid frequency f is within a range of the first minimum frequency value and the first maximum frequency value;
a ninth step (S9) determining whether the serial number (SW) of said inverter selected out of said inverters is 2 if it is determined in the second step (S2) that the serial number (SW) is not 1;
a tenth step (S10) determining whether the grid frequency f is within a range of a third minimum frequency value and a third maximum frequency value;
an eleventh step (S11) normally operating said selected inverter;
a twelfth step (S12) keeping said selected inverter at stand by if it is determined in the third step (S3) that the grid frequency f is not between the second minimum frequency value and the second maximum frequency value;
a thirteenth step (S13) determining whether said selected inverter state is checked;
a fourteenth step (S14) determining, periodically, whether the grid frequency is normal ;
a fifteenth step (S15) determining whether the grid frequency f is between the first minimum frequency value and the first maximum frequency value;
a sixteenth step (S16) displaying a voltage error if it is determined in the fifth step (S5) that the voltage is not within the normal range;
a seventeenth step (S17) displaying a current error if it is determined in the sixth step (S6) that a current is not within the normal range;
an eighteenth step (S18) displaying a grid frequency error if it is determined in the eighth step (S8) that the grid frequency is not between the first minimum frequency value and the first maximum frequency value; and
a nineteenth step (S19) stopping said selected inverter if it is determined in the thirteenth step (S13) that the inverter state is not checked, or if it is determined in the fifteenth step (S15) that the grid frequency is not between the first minimum frequency value and the first maximum frequency value, or if the sixteenth, seventeenth, and eighteenth steps (S16) (S17) (S18) are performed.

2. The method of claim 1, wherein in the first step, each serial number (SW) allocated to each inverter is set by designating the serial number (SW) as a variable depending on a program installed in a system controller.

## Patentansprüche

1. Verfahren zur Leistungssteuerung von Wechselrichtern und einer Brennstoffzelle in einem Brennstoffzellensystem, umfassend:
einen ersten Schritt (S1), der jedem Wechselrichter eine Seriennummer (SW) zuweist;
einen zweiten Schritt (S2), der für einen Wechselrichter unter den ausgewählten Wechselrichtern bestimmt, ob die Seriennummer 1 ist;
einen dritten Schritt (S3), der bestimmt, ob eine Netzfrequenz f innerhalb eines Bereichs eines zweiten Mindestfrequenzwerts und eines zweiten Höchstfrequenzwerts liegt, der im Voraus als ein sich innerhalb von einem ersten Mindestfrequenzwert bis zu einem ersten Höchstfrequenzwert erstreckender Referenzbereich bestimmt worden ist;
einen vierten Schritt (S4), der normalerweise den ausgewählten Wechselrichter betreibt;
einen fünften Schritt (S5), der bestimmt, ob die Ausgangsspannung des ausgewählten Wechselrichters innerhalb eines normalen Bereichs liegt;
einen sechsten Schritt (S6), der bestimmt, ob der Ausgangsstrom des ausgewählten Wechselrichters innerhalb eines normalen Bereichs liegt;
einen siebten Schritt (S7), der normalerweise den ausgewählten Wechselrichter betreibt;
einen achten Schritt (S8), der bestimmt, ob die Netzfrequenz f innerhalb eines Bereichs des ersten Mindestfrequenzwerts und des ersten Höchstfrequenzwerts liegt;
einen neunten Schritt (S9), der bestimmt, ob die Seriennummer (SW) des unter den Wechselrichtern ausgewählten Wechselrichters 2 ist, wenn im zweiten Schritt (S2) bestimmt wird, dass die Seriennummer (SW) nicht 1 ist;
einen zehnten Schritt (S10), der bestimmt, ob die Netzfrequenz f innerhalb eines Bereichs eines dritten Mindestfrequenzwerts und eines dritten Höchstfrequenzwerts liegt;
einen elften Schritt (S11), der normalerweise den ausgewählten Wechselrichter betreibt;
einen zwölften Schritt (S12), um den ausgewählten Wechselrichter in Bereitschaft zu halten, wenn im dritten Schritt (S3) bestimmt wird, dass die Netzfrequenz f nicht zwischen dem zweiten Mindestfrequenzwert und dem zweiten Höchstfrequenzwert liegt;
einen dreizehnten Schritt (S13), der bestimmt, ob der Zustand des ausgewählten Wechselrichters überprüft wird;
einen vierzehnten Schritt (S14), der periodisch bestimmt, ob die Netzfrequenz normal ist;
einen fünfzehnten Schritt (S15), der bestimmt, ob Netzfrequenz f zwischen dem ersten Mindestfrequenzwert und dem ersten Höchstfrequenzwert liegt;
einen sechzehnten Schritt (S16), der einen Spannungsfehler anzeigt, wenn im fünften Schritt (S5) bestimmt wird, dass die Spannung nicht im normalen Bereich liegt;
einen siebzehnten Schritt (S17), der einen Stromfehler anzeigt, wenn im sechsten Schritt (S6) bestimmt wird, dass ein Strom nicht im normalen Bereich liegt;
einen achtzehnten Schritt (S18), der einen Netzfrequenzfehler anzeigt, wenn im achten Schritt (S8) bestimmt wird, dass die Netzfrequenz nicht zwischen dem ersten Mindestfrequenzwert und dem ersten Höchstfrequenzwert liegt; und
einen neunzehnten Schritt (S19), der den ausgewählten Wechselrichter anhält, wenn im dreizehnten Schritt (S13) bestimmt wird, dass der Zustand des Wechselrichters nicht überprüft ist, oder wenn im fünfzehnten Schritt (S15) bestimmt wird, dass die Netzfrequenz nicht zwischen dem ersten Mindestfrequenzwert und dem ersten Höchstfrequenzwert liegt, oder wenn der sechzehnte, siebzehnte und achtzehnte Schritt (S16) (S17) (S18) ausgeführt werden

2. Verfahren nach Anspruch 1, wobei im ersten Schritt jede Seriennummer (SW), die jedem Wechselrichter zugeordnet ist, durch Bezeichnen der Seriennummer (SW) als eine Variable in Abhängigkeit von einem in einer Systemsteuerung installierten Programm festgelegt wird.

## Revendications

1. Procédé pour commander la sortie d'onduleurs et une pile à combustible dans un système de pile à combustible, comprenant :
une première étape (S1) attribuant un numéro de série (SW) à chaque onduleur ;
une deuxième étape (S2) déterminant, pour un onduleur sélectionné parmi lesdits onduleurs, si le numéro de série est 1 ;
une troisième étape (S3) déterminant si une fréquence de réseau f est dans une plage d'une deuxième valeur de fréquence minimum et d'une deuxième valeur de fréquence maximum qui sont prédéterminées dans une plage de référence allant d'une première valeur de fréquence minimum à une première valeur de fréquence maximum ;
une quatrième étape (S4) mettant en oeuvre normalement ledit onduleur sélectionné ;
une cinquième étape (S5) déterminant si la sortie de tension dudit onduleur sélectionné est dans une plage normale ;
une sixième étape (S6) déterminant si la sortie de courant dudit onduleur sélectionné est dans une plage normale ;
une septième étape (S7) mettant en oeuvre normalement ledit onduleur sélectionné ;
une huitième étape (S8) déterminant si la fréquence de réseau f est dans une plage de la première valeur de fréquence minimum et de la première valeur de fréquence maximum ;
une neuvième étape (S9) déterminant si le numéro de série (SW) dudit onduleur sélectionné parmi lesdits onduleurs est 2 s'il est déterminé, à la deuxième étape (S2), que le numéro de série (SW) n'est pas 1 ;
une dixième étape (S10) déterminant si la fréquence de réseau f est dans une plage d'une troisième valeur de fréquence minimum et d'une troisième valeur de fréquence maximum ;
une onzième étape (S11) mettant en oeuvre normalement ledit onduleur sélectionné ;
une douzième étape (S12) maintenant ledit onduleur sélectionné en attente s'il est déterminé, à la troisième étape (S3), que la fréquence de réseau f n'est pas entre la deuxième valeur de fréquence minimum et la deuxième valeur de fréquence maximum ;
une treizième étape (S13) déterminant si l'état dudit onduleur sélectionné est vérifié ;
une quatorzième étape (S14) déterminant, périodiquement, si la fréquence de réseau est normale ;
une quinzième étape (S15) déterminant si la fréquence de réseau f est entre la première valeur de fréquence minimum et la première valeur de fréquence maximum ;
une seizième étape (S16) affichant une erreur de tension s'il est déterminé, à la cinquième étape (S5), que la tension n'est pas dans la plage normale ;
une dix-septième étape (S17) affichant une erreur de courant s'il est déterminé, à la sixième étape (S6), qu'un courant n'est pas dans la plage normale ;
une dix-huitième étape (S18) affichant une erreur de fréquence de réseau s'il est déterminé, à la huitième étape (S8), que la fréquence de réseau n'est pas entre la première valeur de fréquence minimum et la première valeur de fréquence maximum ; et
une dix-neuvième étape (S19) arrêtant ledit onduleur sélectionné s'il est déterminé, à la treizième étape (S13), que l'état de l'onduleur n'est pas vérifié, ou s'il est déterminé, à la quinzième étape (S15), que la fréquence de réseau n'est pas entre la première valeur de fréquence minimum et la première valeur de fréquence maximum, ou si les seizième, dix-septième et dix-huitièmes étapes (S16) (S17) (S18) sont effectuées.

2. Procédé selon la revendication 1, dans lequel, à la première étape, chaque numéro de série (SW) attribué à chaque onduleur est fixé en désignant le numéro de série (SW) en tant que variable dépendant d'un programme installé dans un contrôleur de système.
